# EUROPEAN PATENT SPECIFICATION

(11) **EP 1 532 205 B1**
(45) Date of publication and mention of the grant of the patent: **30.11.2005**
(21) Application number: 03749327.7
(22) Date of filing: 28.08.2003
(51) Int. Cl.: C08L 67/02, C08L 73/00

(54) **POLYESTER COMPOSITIONS FOR APPEARANCE PARTS**
POLYESTERZUSAMMENSETZUNGEN FÜR TEILE MIT AUSSEHEN
COMPOSITIONS POLYESTER POUR PIECES DONT L'ASPECT EST PREPONDERANT

(30) Priority: 28.08.2002 US 406474 P
(43) Date of publication of application: 25.05.2005
(73) Proprietor: E.I. DU PONT DE NEMOURS AND COMPANY, Wilmington, DE 19898 (US)
(72) Inventor: KOBAYASHI, Toshikazu, Chadds Ford, PA 19317 (US); BRISSOT, Claire, F-01710 Thoiry (FR); FLEXMAN, Edmund, Arthur, Wilmington, DE 19810 (US)
(74) Representative: Morf, Jan Stefan
(86) International application number: PCT/US2003/027425
(87) International publication number: WO 2004/020520

(56) References cited:
- EP-A- 0 494 422
- DE-A- 10 027 161
- US-A- 4 140 670
- US-A- 5 322 908

## Description

### FIELD THE INVENTION

Polyester compositions which contain a copolymer of ethylene, an acrylate ester, and carbon monoxide and optionally a fibrous filler having a relatively small diameter, are particularly suitable for parts whose surface appearance is important, such as appliance panels and automobile body panels.

### FIELD OF THE INVENTION

Thermoplastics are used in a myriad of applications. These applications range from those where the appearance of the thermoplastic part is unimportant to those where the appearance is critical. In consumer items, the appearance of the items is often important and in some instances critical to the acceptance of the article by the potential customer. For example, the appearance of appliances, (power) tools, motor vehicles, home electronic equipment, toys, garden and agricultural machinery and vehicles, and boats, is often important to the potential customer's decision to buy, including the perceived quality of the item. Various types of thermoplastics are used for appearance parts, but where the part also performs some structural function and/or must withstand heat and physical abuse, so-called "engineering polymers" are often used. Among these are polyesters which often have a good balance of physical properties, low water absorption, and thermal resistance. However sometimes one or more of these properties needs to be enhanced by the use of various agents such as fillers and/or toughening agents. However the addition of these types of materials often results in poorer appearance of the finished part, and therefore obtaining a good balance of appearance other properties is often a challenge. Thus, new compositions with good combinations of such properties are constantly being sought.

The toughening of polyesters using various types of polymers dispersed in the polyester as toughening agents is known, see for instance U.S. Patent 4,172,859. None of the ethylene copolymers described herein are preferred or actually used in this patent.

U.S. Patent 5,817,723 describes certain copolymers as toughening agents for various types of thermoplastics. Only examples of toughening polyoxymethylene are described.

The use of certain "needlelike" fillers of specified dimensions in polymer compositions having good surface appearance is known, see for instance U.S. Patent 5,965,655. The use of these fillers with the tougheners described herein is not disclosed.

### SUMMARY OF THE INVENTION

This invention concerns, a composition, comprising a blend of:
(a) a minor part by weight of a copolymer (EACO) consisting essentially of repeat units derived from ethylene, a compound of the formula H₂C=CHCO₂R¹ (I), and carbon monoxide, wherein R¹ is an alkyl group containing 1 to 6 carbon atoms, and said ethylene-derived repeat units are about 49 to about 57 weight percent of said copolymer, (I)-derived repeat units are about 33 to about 40 weight percent of said copolymer, and carbon monoxide-derived repeat units are about 10 to about 14 weight percent of said copolymer; and
(b) a major part by weight of a semicrystalline polyester;
wherein the parts by weight are based on the total amount of (a) and (b) present.

The above composition may additionally comprise short fibers (SF) having an number average diameter of about 6 µm or less.

Also disclosed are shaped articles of the above compositions, including automotive body panels, appliance panels, (power) tool housings, and the like.

### DETAILS OF THE INVENTION

Herein certain terms are used, and some of them are:

By a "semicrystalline polyester" (SCPE) is meant a polyester, which may be a homopolymer or copolymer, which has a heat of fusion of at least about 5 J/g, more preferably at least about 10 J/g, and preferably a melting point of at least about 80°C, more preferably at least about 150°C (for measurement see below). The SCPE may be an isotropic polyester or a liquid crystalline polyester, and is preferably an isotropic polyester. The "TOT Test" for whether a polymer is isotropic or liquid crystalline is described in U.S. Patent 4,118,372, which is hereby included by reference.

By a "minor part by weight" is meant less than 50% by weight is present.

By a "major part by weight" is meant more than 50% by weight is present.

By "short fibers" are meant organic or inorganic fibers having an aspect ratio (ratio of length to diameter) of about 200 or less. These fibers are sometimes also described as "needle-like" or "whiskers".

By "a" or "an" herein, such as an SCPE, EACO or SF is meant one or more.

By "comprising" herein is meant the named items (materials), and any other additional materials or compositions may be present.

A semicrystalline polyester is part of the present composition. Preferred semicrystalline polyesters are poly(alkylene terephthalates) such a poly(ethylene terephthalate) (PET), poly(1,3-propylene terephthalate) (PPT), and poly (1,4-butylene terephthalate) (PBT), poly[1,4-bis(hydroxymethyl)cyclohexane terephthalate] (PCT) and their copolymers containing small amounts (<30 mole percent of the diol and/or diacid components, as appropriate) of other monomers, such as diethylene glycol, isophthalic acid, and 1,4-bis(hydroxymethyl)cyclohexane. PET and PBT and their copolymers are especially preferred. Another useful copolymer is derived from terephthalic acid, ethylene glycol and a relatively low molecular weight poly(ethylene oxide), and is not limited to <30 mole percent poly(ethylene oxide). By derived from herein means derived from that compound or any other chemically equivalent compound in a polymerization reaction. Other useful semicrystalline polyesters are "polarylates" such as a polymer from bisphenol-A and terephthalic acid or a mixture of terephthalic and isophthalic acids.

In a composition containing an SCPE and an EACO, but not the short fiber specified above, it is preferred that the total EACO is about 1 to about 35 percent, more preferably about 2 to 30 percent, by weight of the total of the SCPE and EACO present. For specific applications such a preferred range may vary, for example for automotive body panels a preferred range is about 2 to about 20 weight percent, while for appliance panels is about 2 to about 10 weight percent. If a very tough composition is desired, the range is preferably about 10 to about 30 percent by weight.

The EACO acts as a toughener for the SCPE (composition) which is often needed to make the composition useful for parts such as automotive body panels, particularly if the short fiber described above is present. In addition the EACO surprisingly does not deleteriously affect the appearance of polyester containing parts made with the composition. Many tougheners for polyesters, such as many of those described in U.S. Patents 4,172,859 and 5,817,723 cause the surface of such parts, especially large parts, to have waviness or undulations, thereby detracting from their appearance. Parts made with compositions containing the EACO of the present invention generally speaking have much less waviness or undulations in the surface, see for instance Example 12 and Comparative Example B below (generally speaking the lower the roughness, the lower the waviness), and also have glossy surfaces which have a pleasing appearance and may be painted to give, for instance so-called "Class A" surfaces, particularly useful for automotive body panels.

In a preferred EACO, R¹ is an alkyl group containing 1 to 4 carbon atoms, more preferably R¹ is methyl, ethyl or n-butyl.

However there are also certain disadvantages to the presence of the EACO in the SCPE composition. The EACO tends to "soften" these compositions so they are not stiff enough (for example too low a flexural modulus) in some applications. In addition these compositions may not have the requisite high temperature resistance, particularly stiffness at high temperatures, for example as measured by heat distortion or sag temperature, especially when compared to other types of tougheners for SCPEs. Addition of about 2 to about 25 weight percent, preferably about 5 to about 20 weight percent of a short fiber having an number average diameter of about 6 µm or less, more preferably about 1 µm to about 5 µm, as determined by optical or electron microscopy at 700X, provides improvement in the physical properties of the composition, especially those properties mentioned immediately above. The actual value of the number average diameter and aspect ratio is calculated using appropriate measurements and calculations of the microscopy images, usually using computer processing. These percentages by weight are based on the total weight of SCPE, EACO and SF present in the composition. Preferably these SFs have aspect ratios of about 3 to about 50, more preferably about 5 to about 20. Useful SFs (of the proper particle size) include wollastonite and glass fiber, and wollastonite is preferred. These SFs do not significantly detract from the appearance of parts made containing them.

Oftentimes as the aspect ratio of the SF increases, the heat sag (see below) decreases and stiffness increases.

For other preferred SF dimensions, the number average maximum dimension (length) is about 20 µm or less, more preferably about 15 µm or less, very preferably about 10 µm or less. A preferred minimum average longest dimension is about 0.10 µm or more, more preferably about 0.5 µm or more. Preferably less than 10% of the SF particles have a longest dimension of about 100 µm or more, more preferably less than 5%. Any of these ratios or dimensions may be combined with any other ratios or dimensions of the reinforcing agent, as appropriate. Surface smoothness is often improved is the particle size of the reinforcing agent is towards the small end of the range.

Useful specific SFs include wollastonite, aramid fibers, fibrils or fibrids, carbon fibers, glass fibers, potassium titanate whiskers, boron nitride whiskers, aluminum borate whiskers, magnesium sulfate whiskers and calcium carbonate whiskers. Preferred SFs are wollastonite, potassium titanate whiskers, boron nitride whiskers and aluminum borate whiskers, and an especially preferred SF is wollastonite. All of these specific SFs should have the appropriate dimensions as outlined above. These SFs may be coated with adhesion promoters or other materials which are commonly used to coat fibers used in thermoplastics.

Other materials normally found in thermoplastic compositions may also be present in these compositions, although if the appearance of parts made from them is important, they should preferably not detract from such appearance, nor preferably should they detract from desirable physical properties. Such materials include antioxidants, pigments, other fillers, lubricants, plasticizers, nucleating agents, and flame retardants. Particularly useful additives include lubricants such perfluoro-polymers, epoxy resins such as Epon® 1009 (available from Shell Chemical Co.) in small amounts such as about 0.1 to about 1.0 weight percent (of the entire composition), preferably about 0.3 to about 0.5 weight percent. A preferred flame retardant Pyrochek® 68BP, available from Albemarle Corp., Richmond, VA, USA. In PET containing compositions plasticizers and/or nucleating agents in conventional amounts are preferred additives.

The present compositions, with or without SFs, may be prepared by conventional techniques, for instance melt mixing the ingredients in typical melt mixing equipment such as single or twin screw extruders, see for instance U.S. Patents 5,817,723, 4,172,859, 4,753,980 and European Patent Application 639,613, all of which are hereby included by reference, and the Examples herein.

Shaped parts may be molded from these compositions by any conventional melt forming technique, such injection molding, extrusion, foaming, and blow molding. Other thermoplastic forming techniques such as rotational molding and thermoforming may also be used.

Although the present compositions may be used for making shaped parts in general, they are particularly useful for so-called appearance parts, that is parts whose (surface) appearance is an important attribute of the part quality, particularly in having a smooth, glossy appearing surface. These parts may also be painted to enhance their appearance. The underlying surface is important in obtaining a pleasing painted surface.

One particular type of part that can be made with these compositions are (exterior) automotive body panels, particularly vertical body panels such as fenders, quarter panel, and door panels. Other automotive "parts" included herein as body panels include spoilers, and mirror housings. Typically these are painted, but they also may be colored with pigments mixed into the composition instead. In either case a so-called Class A finish may be obtained with finish systems typically used for automotive vehicles. Another important property for such panels is low heat sag, that is the ability not to sag when heated (in the heat sag test described herein a value of "0" is best, with low absolute values desirable). This is particularly important when the panel is to be painted on line as it will be subjected to high temperature thermal excursion. It is preferred that the (absolute) heat sag value be about 2.0 mm or less, particularly at 200°C.

Another type of part is interior or exterior panels or chassises for large appliances such a refrigerators, washing machines, clothes dryers, and dishwashers. These panels or chassises are appearance parts in that they are visible to the consumer and therefore it is desirable that they have a pleasing appearance. In this instance the parts may be colored by addition of pigment(s) to the polymeric composition or they may be painted.

Housings, cabinets or panels for smaller items such as power tools, small appliances such electric mixers, steam irons, toasters, and microwave ovens, electronic devices such as computer housings, computer monitor housings, television set cabinets, radio cabinets, computer printers housings, VCR housings, and DVD player housings, may also be made from these compositions. In this instance also the parts may be colored by addition of pigment(s) to the polymeric composition, or they may be painted.

Furniture such as "plastic" chairs, tables, cabinets, may also be made from these compositions. These may be made with a "natural" color, pigments may be added to supply color, or they may be painted.

Garden and agricultural equipment and vehicles may also contain appearance parts of the present composition, painted or unpainted, for examples parts, including panels, for lawn and garden tractors, and door panels for tractors.

Because these compositions yield shaped parts with smooth surfaces that also tend to have very little waviness, they may be used as "substrates" for reflectors. For example the surfaces of the reflectors may be metal coated by a variety of methods such as vapor phase deposition, electroplating, metal sputtering, or by using a metallic paint. The resulting parts (if the metal deposition is done correctly) will have a smooth surface and be highly reflective. Thus these parts would be useful as reflectors for lighting such as automotive headlights, automotive tail lights, and decorative lighting, and as mirrors. When used as lighting reflectors the parts must be useful at sufficiently high temperatures that the heat from a light source does not cause damage (for example melting or distortion) to the reflector.

Toys made be made from these compositions where the glossy surfaces will be attractive to children. The shaped parts for the toys may be colored by the use of pigments in the compositions, thereby avoiding the use of paints which maybe toxic or otherwise harmful to children. The toughness of these compositions particularly lends them to use in toys that receive rough use.

Herein melting points and heats of fusion are determined by ASTM D3418-82, at a heating rate of 20°C/min. The peak of the melting endotherm is taken as the melting point. The heat of fusion is taken as the area under the melting endotherm. All of these are measured on the second heat, that is the sample is heated at 20°C/min until the melting point and/or glass transition point, whichever is higher, is exceeded, and then the sample is cooled at 20°C/min to 30°C. Measurements are then taken on a second heat, also done at 20°C/min.

Profilometer roughness measurements of unpainted plaques (130x130x3 mm) was measured by mechanical profilometry using a "Hommeltester T4000" (Hommelwerke GmbH, D-78056 VS-Schwenningen, Germany). For the measurements a dual-skid tracing system "RTK 50" with a skid distance of 10 mm and a diameter tip radius of 5 µm (vertical resolution approximately 0.01 µm) was used. Over a scan length of "L" mm the surface profiles were recorded and the detected signals were stored in a computer after digitizing (typically 4000 data points). In addition, surface roughness parameters (e.g. average roughness Ra) were computed from the measured profiles after filtering using a cut off wavelength of "K" mm. Three scan length "L" were tested with the associated cut off "K" (=1/6 *L) :

| | |
|---|---|
| L=4.8mm | K=0.8mm |
| L=15mm | K=2.5mm |
| L= 48mm | K= 8mm |

For the optical surface characterization of painted surfaces the "Wave Scan" (Byk-Gardner GmbH, D-82538 Geretsried, Germany) was used. The Wave Scan is an orange peel meter, simulates the visual evaluation of surface smoothness. The operation principle is based on the modulation of the reflected light of a small laser diode by surface structures. The laser light illuminates the surface under 60°C and the reflected light is detected at the same but opposite angle. During the measurement the instrument is moved over a scan length of approximately 10 cm, where every 0.08 mm a data point is recorded. The measured data are separated into long wave (LW) (>0.6 mm) and short wave (SW) (<0.6 mm) signals by mathematical filtering. Values for long term and short term waviness are obtained by the variance of the filtered data.

Instrumented impact was measured using the Ceast® Dart Tester (Ceast S.p.a.), which is a dart impact tester. The dart had a 3 mm diameter.

Melt indices were measured by ASTM D1238, at a 2190 g load at 190°C.

Gloss measurements were made using a Novo-Gloss instrument made by Rhopoint Instrumentation, Ltd., Bexhill-on-sea, East Sussex TN39 3LG, Great Britain, at a 60° measurement angle, according to ASTM Method D523.

The test fixture for heat sag is capable of holding the test samples in a fixed position for the entire test. The fixture is made of aluminum, which exhibits a low coefficient of linear thermal expansion. The sample is clamped (bolted) to the fixture so that 112 mm of the length of the sample overhangs the edge of the fixture. The distance (Ao) from lower outer edge of the horizontal sample to the bottom of the fixture is measured to 0.1 mm. The samples are R60 tensile bars, 168 mm long and 4 mm thick. Two bars per sample are used. The fixture (and bars) are placed in an oven at the desired test temperature and remain there for 30 min, after which the fixture is removed from the oven and the bars allowed to cool. If necessary the clamp is retightened and the distance between the base and the edge of the bar is measured again (Af) when the system is at room temperature. The sag value is calculated as Ao-Af (usually in mm). Often test series carried out on different dates cannot be accurately compared, so comparative heat sag values are preferably obtained when the samples are tested together.

In the Examples certain abbreviations are used, and they are:
%E - percent tensile elongation measured using ASTM method D256, at an extension rate of 5.08 cm (2") /min
BA - n-butyl acrylate
CO - carbon monoxide
DOI - distinctness of image measured by Dorigon method
E - ethylene
EA - ethyl acrylate
FM - flexural modulus, except as noted, measured using ASTM method D-790
NI - notched Izod, measured using ASTM method D256
PTS - penterythritol tetrastearate
TS - tensile strength (to break), except as noted, measured using ASTM method D256 at an extension rate of 5.08 cm (2")/min

In the Examples certain ingredients are used, and they are:
Americhem®1859 R3 - a concentrate of 40% carbon black in PET copolyester from Americhem, Inc., Cuyahoga Fall, OH 44221, USA
ANOX 20NDB - an antioxidant available from Great Lakes Chemical Corp., West Lafayette, IN 47906, USA
Crystar® 1906 - A PET copolymer, inherent viscosity 0.65, containing 12 mole percent copolymerized poly(ethylene oxide) available from E. I DuPont de Nemours & Co., Inc, Wilmington, DE 19898, USA
Crystar® 3934 - PET homopolymer, IV = 0.67, available from E. I. DuPont de Nemours & Co., Inc., Wilmington, DE 19898 USA
Hostamont® NAV 101 - sodium montanate available from Clariant Corp. D-65840 Sulzbach am Taunns, Germany
Trganox® 1010 - antioxidant available from Ciba Specialty Chemicals, Tarrytown, NY 10591, USA.
Nyad®M 1250 - 3 µm particle size wollastonite available from Nyco Minerals, Calgary, AB, Canada.
Nyglos® 5 - average 5 µm length wollastonite fibers with no sizing available from Nyco Minerals, Calgary, AB, Canada.
Nyglos® 4 - 4 µm diameter wollastonite fibers available from Nyco Minerals.
Plasthall® 809 - polyethylene glycol 400 di-2-ethylhexanoate.
Polymer A - ethylene/n-butyl acrylate/carbon monoxide (57/33/10 wt. %) copolymer, melt index 12 g/10 min
Polymer B - ethylene/n-butyl acrylate/carbon monoxide (57/33/10 wt. %) copolymer, melt index 100 g/10 min
Polymer C - ethylene/n-butyl acrylate/glycidyl methacrylate (67/28/5 wt. %) copolymer.
Surlyn® 8920 - ethylene/methacrylic acid (85/15 wt. %) copolymer, neutralized with sodium, melt index 0.9 g/10 min, available from E. I. DuPont de Nemours & Co., Inc, Wilmington, DE 19898, USA
Teflon® TE9050 - A powdered copolymer of tetrafluoroethylene and hexafluoropropylene, available from E. I. DuPont de Nemours & Co., Inc, Wilmington, DE 19898, USA
Uniplex® 810 - a plasticizer which is poly(ethylene glycol) dilaurate with an average molecular weight of 946 available from Unitex Chemical Corp., Greensboro, NC 27406, USA

### Examples 1-7 and Comparative Example A

PBT having an inherent viscosity of 1.2 measured at a concentration of 0.4 g in 7.00 ml of 1:1 (weight) methylene chloride/trifluoroacetic acid at 19°C, was dried in a vacuum oven overnight at 80°C overnight, mixed with a measured amount of EACO, and melt mixed in a 28 mm Werner and Pfleiderer counterrotating twin screw extruder with two hard working sections and a vacuum port, the extruder operating at 200 rpm, and a having one hole die, with the barrel temperature set to 220°C.

All samples were molded on a 6 oz. Van Dorn reciprocating injection molding machine, except for examples 2 and 3 which were molded on a 1.5 oz. Arberg reciprocating injection molding machine. Data for the injection molding conditions, amounts and nature of the EACO used, and physical properties of the resulting compositions are given in Table 1.

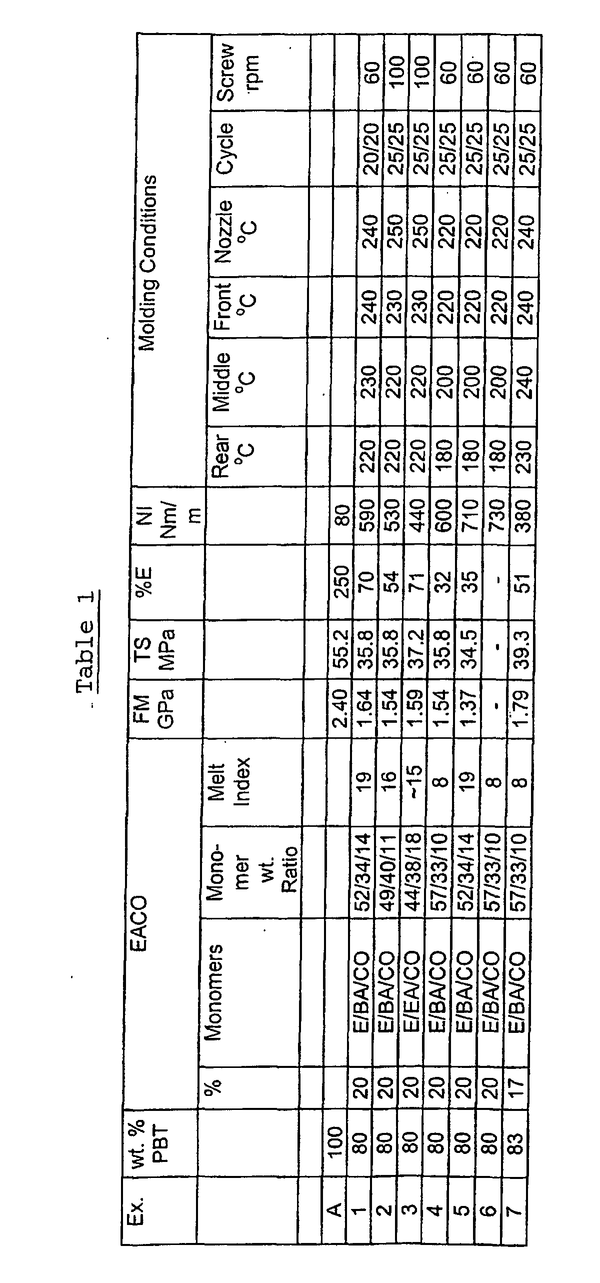

### Examples 8-11

The compositions were prepared by compounding on a 30 mm Werner and Pfleiderer twin-screw extruder with liquid injection line and vent port at rate of about 23 kg/h at 300 RPM. The Nyglos® 4 and Nyad® M1250 were side-fed and plasticizer was fed through injection line. The barrel temperatures were set to 280°C and melt temperatures were usually about 300°C. Exiting the extruder, the polymer was passed through a die to form strands that were frozen in a quench tank and subsequently chopped to make pellets. The compounded product was dried 120°C for 5 h and then molded using laboratory size injection molding machine (6 ounce machine made by Van Dorn Co.) into typical ASTM testing bars as well as 7.5 x 12.5 cm x 1.6 mm (thickness) plaque for gloss measurement. Barrel temperatures were set to 280°C and the mold temperature was 120°C.

**Table 2**

| Example | | 8 | 9 | 10 | 11 |
|---|---|---|---|---|---|
| | | | | | |
| Crystar® 3934 | | 74.3 | 66.7 | 66.9 | 74.3 |
| Hostamont® NAV 101 | | 0.4 | | 0.4 | 0.4 |
| Surlyn® 8920 | | | 3 | | |
| Teflon® TE9050 | | 0.1 | 0.1 | | 0.1 |
| Irganox® 1010 | | 0.3 | 0.3 | 0.3 | 0.3 |
| Polymer A | | 3 | | 3 | 3 |
| Polymer B | | | 3 | | |
| PTS | | | | 0.5 | |
| Nyglos® 4 | | 15 | 20 | 15 | 15 |
| Nyad® M 1250 | | | | 7 | |
| Uniplex® 810 | | 3 | 3 | 3 | |
| Americhem® 18589 R3 | | 3.9 | 3.9 | 3.9 | 3.9 |
| Plasthall® 809 | | | | | 3 |
| Total | | 100 | 100 | 100 | 100 |

| | Units | | | | |
|---|---|---|---|---|---|
| Tensile Strength | MPa | 60 | 65 | 56 | 61 |
| % Elongation at Break | % | 2.4 | 2.4 | 2.7 | 2.3 |
| Flexural Modulus | MPa | 512 | 556 | 456 | 508 |
| | | | | | |
| Gloss | | 100.2 | 98.2 | 100.7 | 96.6 |

### Example 12 and Comparative Example A

The compositions were compounded on a twin screw extruder (Berstorff 40 mm). The following ingredients were first mixed together in a powder blend: Irganox® 1010, PTS, TSP, Polymer A or Polymer B, and added in barrel of the extruder. The Plasthall® 809 was injected in the front, and the Crystar® 3934 was fed in the main feeder in the back. Nyglos® 4 was side fed. The following set up was used: rpm=300; torque = 80; throughput=80kg/h; melt temperature (measured)=280°C.

The compositions were molded into tensile bars with an "Engel 1250" injection molded machine . The melt temperature was 280°C, the hold pressure was 80 MPa, and the mold temperature 110°C. Plaques 130x130x3 mm for profilometer testing were molded on a Nestal injection molding machine. The melt temperature was 285°C, the mold temperature was 60°C, and hold pressure in the mold was 50 MPa. Compositions and test results are summarized in Table 3.

**Table 3**

| Example | | | | A | 12 |
|---|---|---|---|---|---|
| | | | | | |
| Crystar® 3934 | | | | 25.42 | 25.42 |
| Crystar® 1906 | | | | | 43 43 |
| Polymer C | | | | 10 | |
| Polymer A | | | | | 10 |
| Trisodium phosphate | | | | 0.7 | 0.7 |
| Plasthall® 809 | | | | 4.44 | 4.44 |
| PTS | | | | 0.9 | 0.9 |
| Irganox®1010 | | | | 0.54 | 0.54 |
| Nyglos® 4 | | | | 15 | 15 |
| | | | | | |
| | Sum | | | 100.00 | 100.00 |
| | | Method | Units | | |
| | | | | | |
| Tensile Testing | | ISO R60/NE | | | |
| | E Modulus | 527-1/2 | MPa | 1798.8 | 3021 |
| | Strain @ yield | 527-1/2 | % | 6.6 | 2.5 |
| | Strain @ break | 527-1/2 | % | 17.5 | 6.1 |
| | Stress @ break | 527-1/2 | MPa | 35.8 | 40.7 |
| | | | | | |

| Impact | | | | | |
|---|---|---|---|---|---|
| Charpy unnotched | | ISO 179/1eU | kJ/m² | 69.7 | 30.56 |
| Charpy notched | | ISO 179/1eA | kJ/m² | | 1.50 |
| | | | | | |

| Heat sag | | | | | |
|---|---|---|---|---|---|
| | 180°C,30min | | mm | -3.25 | -1.35 |
| | 200°C, 30min | | mm | -4 | -1.75 |
| | | | | | |
| Flexural E-Modulus | | ISO 178 | | | |
| | Flex Strength | | MPa | | 18.1 |
| | E-Modulus | | MPa | | 2923 |
| | | | | | |

| Profilometer (molded plaques), before annealing | | | | | |
|---|---|---|---|---|---|
| | Ra at 4.8mm | | µm | 0.56 | 0.38 |
| | Ra at 15 mm | | µm | 0.56 | 0.40 |
| | Ra at 48 mm | | µm | 0.57 | 0.40 |

| Profilometer (molded plaques) after annealing 200°C/30 min | | | | | |
|---|---|---|---|---|---|
| | Ra at 4.8mm | | µm | 0.63 | 0.41 |
| | Ra at 15 mm | | µm | 0.64 | 0.43 |
| | Ra at 48 mm | | µm | 0.65 | 0.45 |
| | | | | | |

| CEAST Impact | | | | | |
|---|---|---|---|---|---|
| | Force, max | | N | 2430 | 1602 |
| | Energy at force max | | J | 7.4 | 3.8 |
| | Total energy to break | | J | 9.4 | 6.3 |

### Example 13

The compositions were prepared by compounding on a 30 mm Werner and Pfleiderer twin-screw extruder with liquid injection line and vent port at rate of about 23 kg/h at 300 RPM. The Nyglos® 4 was side-fed and plasticizer was fed through injection line. The barrel temperatures were set to 280°C and melt temperatures were usually about 300°C. Exiting the extruder, the polymer was passed through a die to form strands that were frozen in a quench tank and subsequently chopped to make pellets. Except for the parts mentioned below, the compounded product was dried 120°C for 5 h and then molded using laboratory size injection molding machine (6 ounce machine made by Van Dorn Co.) into typical ASTM testing bars as well as 7.5 x 12.5 cm x 1.6 mm (thickness) plaque for gloss measurement. Barrel temperatures were set to 280°C and the mold temperature was 120°C.

Plaques for surface testing (130 mmx130 mmx3 mm) were molded on a Netstal 1750 injection molding machine, the melt temperature was 250°C, and the mold temperature was 120°C. Tensile bars for heat sag measurements were molded on an Engel 1250 injection molding machine with a melt temperature of 290°C, a mold temperature of 120°C and a hold pressure of 80 MPa.

All results are given in Table 4.

**Table 4**

| Example | | | | 13 |
|---|---|---|---|---|
| ANOX 20NDB | | | | 0.4 |
| Crystar® 3934 | | | | 74.1 |
| NAV 101 | | | | 0.5 |
| Polymer A | | | | 3 |
| Teflon® TE9050 | | | | 0.1 |
| Americhem® 18589R3 | | | | 3 |
| Nyglos® 4 | | | | 15 |
| Uniplex® 810 | | | | 3 |
| | | | | |
| | Total | | | 100 |

| | | Method | Units | |
|---|---|---|---|---|
| Tensile Strength | | | MPa | 63 |
| Tensile Elongation | | | % | 2.6 |
| Flexural Modulus | | | MPa | 5250 |
| Flexural Strength | | | MPa | 112 |
| Notched Izod Impact | | | J/m | 31 |
| Unnotched Izod Impact | | | J/m | 419 |
| | | | | |

| Roughness on molded plaques, no annealing | | | | |
|---|---|---|---|---|
| | Ra at 4.8mm | | µm | 0.06 |
| | Ra at 15mm | | µm | 0.07 |
| | Ra at 48mm | | µm | 0.09 |

| Roughness on molded plaques, annealed 200°C/30 min | | | | |
|---|---|---|---|---|
| | Ra at 4.8mm | | µm | 0.08 |
| | Ra at 15mm | | µm | 0.09 |
| | Ra at 48mm | | µm | 0.11 |
| | | | | |

| Wave scan (on painted plaques) | | | | |
|---|---|---|---|---|
| | SW | | | 21.4 |
| | LW | | | 24.5 |
| | | | | |

| Heat sag 30 min : | | | | |
|---|---|---|---|---|
| | 120°C | | mm | -0.25 |
| | 150°C | | mm | -0.9 |
| | 180°C | | mm | -0.6 |
| | 200°C | | mm | -1.9 |

The composition of Example 13 has an excellent combination of low heat sag, low roughness (even after annealing at high temperature) and very little waviness (after painting), making it exceptionally useful for making parts requiring so-called Class A surfaces.

### Examples 14-19

The compositions were compounded on a 40 mm Berstorff twin screw extruder. Irganox® 1010, the PTS, Hostamont® NAV 101, and Polymer A were first preblended and then added to the first barrel of the extruder. The Plasthall® 809 was injected in the front barrel, and the Crystar® polymers were added to the rear of the extruder, and Nyglos® 5 was side fed. The extruder was run at 400 rpm, the torque was 35-40, the throughput about 70-100 kg/h, and the melt temperature was 285°C. The compositions were molded on an Engel 1250 injection molding machine, with a melt temperature of 260°C, a mold temperature of 110°C, and a mold pressure of 80 MPa. Compositions and test results are given in Table 5. For reference purposes, painted metal had a long wave value of 7, a short wave value of 7.9, and a DOI of 96.1.

**Table 5**

| Example | | | | 14 | 15 | 16 | 17 | 18 | 19 |
|---|---|---|---|---|---|---|---|---|---|
| | | | | | | | | | |
| Crystar® 3934 | | | | 81.56 | 76.56 | 66.56 | 31.53 | 29.46 | 25.76 |
| Crystar® 1906 | | | | | | | 50.03 | 47.1 | 40.8 |
| Nyglos® 5 | | | | 15 | 15 | 15 | 15 | 15 | 15 |
| Polymer A | | | | 0 | 5 | 15 | 0 | 5 | 15 |
| Plasthall® 809 | | | | 1.5 | 1.5 | 1.5 | 1.5 | 1.5 | 1.5 |
| Hostamont® NAV 101 | | | | 0.5 | 0.5 | 0.5 | 0.5 | 0.5 | 0.5 |
| PTS | | | | 0.9 | 0.9 | 0.9 | 0.9 | 0.9 | 0.9 |
| Irganox® 1010 | | | | 0.54 | 0.54 | 0.54 | 0.54 | 0.54 | 0.54 |
| | | | | | | | | | |
| | Sum | | | 100.00 | 100.00 | 100.00 | 100.00 | 100.00 | 100.00 |
| | | | | | | | | | |

| | | Method | Unit | | | | | | |
|---|---|---|---|---|---|---|---|---|---|
| Flex Modulus | | ISO 178 | MPa | 4700.00 | 4901.00 | 4332.00 | 3863.00 | 2498.00 | 3248.00 |
| Flex strength | | ISO 178 | MPa | 28.10 | 29.40 | 26.20 | 23.10 | 15.50 | 19.70 |
| | | | | | | | | | |

| Tensile Testing | | ISO R60/NE | | | | | | | |
|---|---|---|---|---|---|---|---|---|---|
| | E Modulus | 527-1/2 | MPa | 5251.9 | 4702.6 | 4364.5 | 2711.4 | 3484.8 | 3270.7 |
| | Strain @ Yield | | | 2.6 | 2.1 | 2.1 | 5.5 | 2.7 | 2.5 |
| | Strain @ break | 527-1/2 | % | 2.5 | 3.3 | 3.8 | 12 | 13.2 | 11.3 |
| | Stress @ Yield | 527-1/2 | MPa | 80.2 | 57.7 | 51.8 | 58.1 | 53.6 | 45.9 |
| | | | | | | | | | |
| Heat Sag 210C, 30 min | | | mm | -3.25 | -3.5 | -2.25 | -5.25 | -4.25 | -4.75 |
| | | | | | | | | | |

| CEAST Impact, 23oC | | | | | | | | | |
|---|---|---|---|---|---|---|---|---|---|
| | Force max | | N | 1109.2 | 1221.7 | 1066.5 | 852.7 | 1320 | 1692 |
| | Energy at force max | | J | 1.7 | 1.5 | 2.1 | 0.8 | 1.5 | 2.3 |
| | Total energy to break | | J | 3.4 | 3.3 | 3.8 | 2.4 | 4.5 | 4.1 |
| | | | | | | | | | |

| Painted Surface | | | | | | | | | |
|---|---|---|---|---|---|---|---|---|---|
| | Long wave | | | 4.0 | 8.4 | 16.3 | 9.8 | 6.6 | 8.2 |
| | Short wave | | | 7.5 | 10.4 | 22.5 | 9.3 | 23.8 | 39.7 |
| | DOI (Dorigon) | | | 96.7 | 94.9 | 89.3 | 95.5 | 90.4 | 86.0 |

## Claims

1. A composition, comprising a blend of:
(a) a minor part by weight of a copolymer consisting essentially of repeat units derived from ethylene, a compound of the formula H₂C=CHCO₂R¹ (I), and carbon monoxide, wherein R¹ is an alkyl group containing 1 to 6 carbon atoms, and said ethylene-derived repeat units are about 49 to about 57 weight percent of said copolymer, (I)-derived repeat units are about 33 to about 40 weight percent of said copolymer, and carbon monoxide-derived repeat units are about 10 to about 14 weight percent of said copolymer; and
(b) a major part by weight of a semicrystalline copolyester;
wherein the weight percents are based on the total amount of (a) and (b) present.

2. The composition as recited in claim 1 wherein said copolymer (a) is about 1 to about 35 weight percent of the total of (a) and (b) present.

3. The composition as recited in claim 2 additionally comprising:
(c) 2 to about 25 of second weight percent of a short fiber having a diameter of about 6 µm or less;
wherein said second weight percent is based on the total amount of (a), (b) and (c) present.

4. The composition as recited in claim 1, 2 or 3 wherein R¹ is ethyl or n-butyl.

5. The composition as recited in claim 3 wherein said short fiber has a number average length of about 20 µm or less.

6. The composition as recited in claim 3 wherein said aspect ratio is about 3 to about 50, and said short fiber has a number average length of about 0.5 µm to about 10 µm, and said short fiber is about 5 to about 25 percent by weight of the total amount of (a), (b) and (c) present.

7. The composition as recited in claim 3, 5 or 6 wherein said short fibers are wollastonite.

8. The composition as recited in any one of claims 1 to 7 wherein said semicrystalline polyester is a poly(alkylene terephthalate).

9. The composition as recited in claim 8 wherein said poly(alkylene terephthalate) is poly(ethylene terephthalate) or poly(1,4-butylene terephthalate).

10. An appearance part comprising the composition of any one of claims 1 to 9.

11. The appearance part as recited in claim 10 which is painted.

12. The appearance part as recited in claim 10 which is pigmented.

13. An automotive body panel comprising the composition of any one of claims 1 to 9.

14. The automotive body panel as recited in claim 13 which is at least partly painted.

15. The automotive body panel as recited in claim 14 which is painted on line.

16. An appliance, power tool, electronic device, furniture, reflector, or toy comprising the composition of any one of claims 1 to 9.

17. The appliance, power tool, electronic device, furniture, reflector, or toy of claim 16 wherein at least a part of said composition is painted.

## Patentansprüche

1. Zusammensetzung, umfassend eine Mischung aus:
(a) Einem kleineren Gewichtsteil eines Copolymers, bestehend im Wesentlichen aus Wiederholungseinheiten, die sich von Ethylen, einer Verbindung der Formel H₂C=CHCO₂R¹ (I) und Kohlenmonoxid herleiten, worin R¹ eine Alkylgruppe, enthaltend 1 bis 6 Kohlenstoffatom(e) darstellt, und die sich von Ethylen herleitenden Wiederholungseinheiten ca. 49 bis ca. 57 Gew.-% bezogen auf das Copolymer betragen, die sich von (I) herleitenden Wiederholungseinheiten ca. 33 bis ca. 40 Gew.-% bezogen auf das Copolymer betragen und die sich von Kohlenmonoxid herleitenden Wiederholungseinheiten ca. 10 bis ca. 14 Gew.-% bezogen auf das Copolymer betragen; und
(b) einem größeren Gewichtsteil eines semikristallinen Copolyesters;
worin die Gewichtsprozente auf die Gesamtmenge von vorliegendem (a) und (b) bezogen sind.

2. Zusammensetzung nach Anspruch 1, worin das Copolymer (a) ca. 1 bis ca. 35 Gew.% bezogen auf die Gesamtmenge von vorliegendem (a) und (b) beträgt.

3. Zusammensetzung nach Anspruch 2, die zusätzlich Folgendes umfasst:
(c) 2 bis ca. 25 von zweitem Gewichtsprozent einer kurzen Faser mit einem Durchmesser von ca. 6 µm oder weniger;
worin das zweite Gewichtsprozent auf die Gesamtmenge von vorliegendem (a), (b) und (c) bezogen ist.

4. Zusammensetzung nach Anspruch 1, 2 oder 3, worin R¹ Ethyl oder n-Butyl darstellt.

5. Zusammensetzung nach Anspruch 3, worin die kurze Faser ein Zahlenmittel der Länge von ca. 20 µm oder weniger aufweist.

6. Zusammensetzung nach Anspruch 3, worin das Aspektverhältnis ca. 3 zu ca. 50 beträgt und die kurze Faser ein Zahlenmittel der Länge von ca. 0,5 µm bis ca. 10 µm aufweist, und die kurze Faser ca. 5 bis ca. 25 Gew.-% bezogen auf die Gesamtmenge von vorliegendem (a), (b) und (c) beträgt.

7. Zusammensetzung nach Anspruch 3, 5 oder 6, worin die kurzen Fasern Wollastonit darstellen.

8. Zusammensetzung nach einem der Ansprüche 1 bis 7, worin der semikristalline Polyester ein Poly(alkylenterephthalat) darstellt.

9. Zusammensetzung nach Anspruch 8, worin das Poly(alkylenterephthalat) Poly(ethylenterephthalat) oder Poly(1,4-butylenterephthalat) darstellt.

10. 'Aussehensteil', umfassend die Zusammensetzung nach einem der Ansprüche 1 bis 9.

11. 'Aussehensteil' nach Anspruch 10, das angestrichen ist.

12. 'Aussehensteil' nach Anspruch 10, das pigmentiert ist.

13. Kraftfahrzeug-Karosserieblech, umfassend die Zusammensetzung nach einem der Ansprüche 1 bis 9.

14. Kraftfahrzeug-Karosserieblech nach Anspruch 13, das mindestens teilweise angestrichen ist.

15. Kraftfahrzeug-Karosserieblech nach Anspruch 14, das am Fließband angestrichen wird.

16. Gerät, Elektrowerkzeug, elektronisches Bauelement, Möbel, Reflektor oder Spielzeug, umfassend die Zusammensetzung nach einem der Ansprüche 1 bis 9.

17. Gerät, Elektrowerkzeug, elektronisches Bauelement, Möbel, Reflektor oder Spielzeug nach Anspruch 16, worin mindestens ein Teil der Zusammensetzung angestrichen ist.

## Revendications

1. Composition comprenant un mélange:
(a) d'une partie mineure en poids d'un copolymère consistant essentiellement en des unités répétées dérivées de l'éthylène, d'un composé de formule H₂C=CHCO₂R¹ (I) et de monoxyde de carbone, où R¹ est un groupement alkyle contenant de 1 à 6 atomes de carbone et lesdites unités répétées dérivées de l'éthylène représentent de 49 environ à 57 pour cent environ dudit copolymère, les unités répétées dérivées de (I) représentent de 33 environ à 40 pour cent environ dudit copolymère et les unités répétées dérivées du monoxyde de carbone représentent de 10 environ à 14 pour cent environ dudit copolymère; et
(b) d'une partie majeure en poids d'un copolyester semicristallin;
dans laquelle les pourcentages en poids sont en fonction de la quantité totale de (a) et (b) présents.

2. Composition selon la revendication 1, dans laquelle ledit copolymère (a) représente de 1 environ à 35 pour cent environ du total de (a) et (b) présents.

3. Composition selon la revendication 2, qui comprend également:
(c) de 2 à 25 environ d'un second pourcentage en poids d'une fibre courte d'un diamètre de 6 µm environ ou moins;
dans laquelle le second pourcentage en poids est en fonction de la quantité totale de (a), (b) et (c) présents.

4. Composition selon la revendication 1, 2 ou 3, dans laquelle R¹ est un groupement éthyle ou n-butyle.

5. Composition selon la revendication 3, dans laquelle ladite fibre courte a une longueur moyenne en nombre de 20 µm environ ou moins.

6. Composition selon la revendication 3, dans laquelle le rapport de forme est compris entre 3 environ et 50 environ, et ladite fibre courte a une longueur moyenne en nombre comprise entre 0,5 µm environ et 10 µm environ et représente 5 environ à 25 pour cent environ en poids de la quantité totale de (a), (b) et (c) présents.

7. Composition selon la revendication 3, 5 ou 6, dans laquelle lesdites fibres courtes sont en wollastonite.

8. Composition selon l'une quelconque des revendications 1 à 7, dans laquelle le polyester semicristallin est un poly(téréphtalate d'alkylène).

9. Composition selon la revendication 8, dans laquelle ledit poly(téréphtalate d'alkylène) est le poly(téréphtalate d'éthylène) ou le poly(téréphtalate de 1,4-butylène).

10. Pièce d'aspect comprenant la composition selon l'une quelconque des revendications 1 à 9.

11. Pièce d'aspect selon la revendication 10, qui est peinte.

12. Pièce d'aspect selon la revendication 10, qui est pigmentée.

13. Panneau de carrosserie automobile comprenant la composition selon l'une quelconque des revendications 1 à 9.

14. Panneau de carrosserie automobile selon la revendication 13, qui est au moins en partie peint.

15. Panneau de carrosserie automobile selon la revendication 14, qui est peint en chaîne.

16. Appareil, outil à moteur, dispositif électronique, meuble, réflecteur ou jouet comprenant la composition selon l'une quelconque des revendications 1 à 9.

17. Appareil, outil à moteur, dispositif électronique, meuble, réflecteur ou jouet selon la revendication 16, dans lequel une partie au moins de la composition est peinte.
